# EUROPÄISCHE PATENTSCHRIFT

(11) **EP 1 281 026 B1**
(45) Veröffentlichungstag und Bekanntmachung des Hinweises auf die Patenterteilung: **07.12.2005**
(21) Anmeldenummer: 01945070.9
(22) Anmeldetag: 02.05.2001
(51) Int. Cl.: F23G 5/30, F23G 7/10, F23G 7/12, F23G 5/16, F23N 5/00, C10J 3/54

(54) **VERFAHREN UND VORRICHTUNG FÜR DIE VERBRENNUNG VON ORGANISCHEM RESTSTOFF**
METHOD AND DEVICE FOR INCINERATING ORGANIC WASTE MATERIAL
PROCEDE ET DISPOSITIF POUR INCINERER DES SOUS-PRODUITS ORGANIQUES

(30) Priorität: 03.05.2000 DE 10021448
(43) Veröffentlichungstag der Anmeldung: 05.02.2003
(73) Patentinhaber: Air Liquide Deutschland GmbH, 40235 Düsseldorf (DE); InfraServ GmbH & Co. Höchst KG, 65926 Frankfurt am Main (DE)
(72) Erfinder: GROSS, Gerhard, 47877 Willich (DE); LUDWIG, Paul, 65779 Kelkheim (DE); WASSMANN, Diana, 47799 Krefeld (DE); THEIS, Hans-Peter, 65439 Floersheim (DE)
(74) Vertreter: Kahlhöfer, Hermann
(86) Internationale Anmeldenummer: PCT/EP2001/004901
(87) Internationale Veröffentlichungsnummer: WO 2001/084051

(56) Entgegenhaltungen:
- EP-A- 0 708 297
- DE-A- 19 714 073
- GB-A- 2 046 415
- GB-A- 2 285 119
- US-A- 4 308 810
- US-A- 4 441 435
- US-A- 4 648 332

## Beschreibung

Die vorliegende Erfindung betrifft ein Verfahren für die Verbrennung von organischem Reststoff, indem der Reststoff in einem Verbrennungsraum von einem sauerstoffhaltigen Fluidisierungsgas unter Bildung einer fluidisierten Partikelschicht durch eine Fluidisierungseinrichtung von unten durchströmt und verbrannt, und entstehendes Rauchgas über einen Freiraum oberhalb der Partikelschicht abgezogen und in einer Nachreaktionszone oder Nachbrennkammer nachverbrannt wird.

Weiterhin betrifft die Erfindung eine Vorrichtung zur Durchführung des Verfahrens, mit einem Verbrennungsraum für die Aufnahme eines organischen Reststoffs, mit einer Zufuhreinrichtung für die Zufuhr des organischen Reststoffs zu dem Verbrennungsraum, mit einem Gaseinlass, umfassend eine Fluidisierungseinrichtung für die Einleitung eines Fluidisierungsgases zur Erzeugung einer fluidisierten Partikelschicht und mit einer Messeinrichtung zur Messung einer Gaskonzentration in einem Freiraum oberhalb der Partikelschicht.

Verbrennungsreaktionen von Brennstoffen in stationären oder zirkulierenden Wirbelschichtreaktoren mit Luft als Fluidisierungsgas sind bekannt und Stand der Technik. Insbesondere wird organischer Reststoff in stationären Wirbelschicht-Reaktoren verbrannt, um zu vermeiden, dass unverbrannter Feinstaub aus der Wirbelschicht ausgetragen wird, der als unverbrannter organischer Kohlenstoff in der Filterasche abgeschieden wird.

Bei dem organischen Reststoff handelt es sich zum Beispiel um Klärschlamm, Abwasser, Laugen, granulierte Kunststoffabfälle, Black Liquor aus der Papierproduktion, Deinkingschlamm, usw.

Fluidisierte Partikelschichten oder Wirbelschichten werden erzeugt, indem ein Fluidisierungsgas mittels einer geeigneten Fluidisierungseinrichtung - wie zum Beispiel einem Anströmboden oder Düsen - von unten durch eine Schicht oder ein Bett aus feinkörnigen oder fließfähigen Feststoffpartikeln durchgeleitet werden. Ab einer, von der Größe, Form und Dichte der Feststoffpartikel abhängigen, charakteristischen Fluidisierungsgeschwindigkeit, der Lockerungsgeschwindigkeit, beginnen die Partikel zu schweben, die Partikelschicht ist fluidisiert. Durch Steigem der Fluidisierungsgeschwindigkeit wird die Höhe des Wirbelbettes vergrößert, wobei die Fluidisierungsgeschwindigkeit proportional zum Volumenstrom des Fluidisierungsgases ist.

Bei Erreichen einer charakteristischen Grenzgeschwindigkeit, der sogenannten Ausblasgeschwindigkeit, wird feinkörniges Bettmaterial aus der Wirbelschicht ausgetragen. Dieser Geschwindigkeitsbereich zwischen Lockerungsgeschwindigkeit und Ausblasgeschwindigkeit kennzeichnet den Bereich der stationären Wirbelschicht. Bei höheren Fluidisierungsgeschwindigkeiten werden neben dem Feinstaub auch größere Partikel ausgetragen, so dass eine ausgeprägte Wirbelschicht nicht mehr vorhanden ist. Dies ist der Bereich der zirkulierenden Wirbelschicht.

Bei Verbrennungsreaktionen in fluidisierten Partikelschichten wird üblicherweise Luft als Fluidisierungsgas verwendet und der Brennstoff von oben auf die Wirbelschicht aufgegeben. Dadurch werden die Feststoffpartikel, bestehend aus dem Bettmaterial und dem Brennstoff in Schwebe gehalten und gleichzeitig die brennbaren Bestandteile oxidiert. Üblicherweise besteht das Bettmaterial aus inerten feinkörnigen Materialien , wie z.B. SiO₂ oder Al₂O₃.

Abhängig vom Heizwert und Wassergehalt des organischen Reststoffes muss zusätzlich Brennstoff in die fluidisierte Partikelschicht eingebracht werden, um die technisch sinnvolle oder gesetzlich notwendige Verbrennungstemperätur im Wirbelbett aufrechtzuerhalten. Als Brennstoffe kommen Brenngase, Heizöl oder Kohle in Frage, die über geeignete Injektoren, in der Wand oder im Anströmboden eingebaut, in die Wirbelschicht zugegeben werden. Falls Kohle verwendet wird, wird diese üblicherweise dem organischen Reststoff vor Eintritt in den Ofen zugemischt.

Ein Verfahren und eine Vorrichtung der eingangs genannten Gattung sind aus der WO97/44620 bekannt. Darin ist ein Verfahren zum Betrieb eines Wirbelschichtofens für die Verbrennung von Klärschlamm, Müll oder Kohle beschrieben, wobei das Verbrennungsgut in eine Brennzone des Ofens eingebracht und unter Bildung einer Wirbelschicht über einen Anströmboden von Luft durchströmt und dabei verbrannt wird. Im Freiraum oberhalb der Wirbelschicht werden die Rauchgase abgezogen und nachverbrannt. Bei der Verbrennung organischer Reststoffe bilden sich giftige Stickoxide (NOₓ), deren Konzentration möglichst gering zu halten ist und eine bestimmte, gesetzlich vorgegebene Obergrenze nicht überschreiten darf. Um den NOₓ-Gehalt der Rauchgase zu senken, wird in der WO97/44620 vorgeschlagen, im Freiraum eine turbulente Bewegung durch Eindüsen eines Inertgas- oder Wasserdampfstroms zu erzeugen. Das bei der Verbrennung gebildete NOₓ wird im Freiraum durch Anwesenheit reduzierend wirkender Substanzen, wie z.B. CO oder NH₃ zu molekularem Stickstoff reduziert. Der NOₓ-Gehalt wird mittels einer im Freiraum vorgesehenen Messvorrichtung erfasst und aufgezeichnet.

In einer direkt an den Freiraum anschließenden Nachverbrennungszone oder Sekundärbrennkammer werden die unverbrannten gasförmigen und festen brennbaren Bestandteile des Rauchgases durch Zugabe von Luft und Zusatzbrennstoff nachverbrannt und das entstehende Rauchgas auf die vorgeschriebene Temperatur aufgeheizt und die gesetzlich vorgeschriebene Sauerstoffkonzentration von zum Beispiel mindestens 6 Vol.-% eingestellt.

In derartigen stationären Wirbelschichtreaktoren ist die Durchsatzleistung von organischem Reststoff durch den vorhandenen Querschnitt des Anströmbodens limitiert. Darüber hinaus ist häufig die maximale Förderleistung des Saugzuggebläses begrenzt, da dessen Förderleistung auf den maximalen Rauchgasvolumenstrom, der proportional zur organischen Reststoffmenge ist, ausgelegt wird.

Die Fluidisierungsgasmenge lässt sich damit bei fest vorgegebenen Wirbelbett-Querschnitten nur in einem sehr engen Bereich variieren mit der Folge, dass bei geringer Menge an organischem Reststoff mehr Luft für die Fluidisierung in den Ofen zugegeben werden muss als für die Verbrennung notwendig. Um die WirbelschichtTemperatur konstant zu halten muss die spezifische Zusatzbrennstoffmenge erhöht werden, d.h. der Verbrennungswirkungsgrad wird reduziert. Höhere Sauerstoffgehalte in der Wirbelschicht als stöchiometrische notwendig bewirken aber bei organischem Brennstoff mit elementar gebundenem Stickstoff, wie z.B. Eiuveißverbindungen etc., höhere Stickoxidbildungsraten. Zur Einhaltung der gesetzlichen Grenzwerte sind dann aufwendige Verfahren zur Entstickung des Rauchgases notwendig.

Der vorliegenden Erfindung liegt daher die Aufgabe zugrunde, ein Verfahren anzugeben, das bei geringer Stickoxidbildung eine hohe Durchsatzleistung für das Verbrennungsgut ermöglicht, d.h. die Produktivität für die Verbrennung von organischem Reststoff erhöht und eine dafür geeignete Vorrichtung bereitzustellen.

Hinsichtlich des Verfahrens wird diese Aufgabe ausgehend von dem eingangs beschriebenen Verfahren erfindungsgemäß einerseits dadurch gelöst, dass die fluidisierte Partikelschicht mit einem Sauerstoff oder mit einem Gasgemish mit einem Sauerstoffgehalt von mindestens 80 vol.% angereichert wird, wobei im Freiraum ein mittlerer Sauerstoffgehalt im Bereich von 0 bis 3 Vol.-% .eingestellt und in einer Nachreaktionszone oder Nachbrennkammer nachverbrannt wird.

Es hat sich gezeigt, dass trotz Anreicherung der Wirbelschicht mit Sauserstoff die NOx-Konzentration gesenkt werden kann. Dies ist zunächst überraschend, denn durch Zugabe eines derart starken Oxidationsmittels wie Sauerstoff sollte an für sich eher eine Erhöhung der NOₓ-Konzentration erwartet werden. Dies gilt insbesondere im Hinblick auf die konventionellen, oben erwähnten SCR- oder SNCR-Verfahren, bei denen sogar ein zusätzliches Reduktionsmittel zur Verringerung der NOₓ-Konzentration eingesetzt wird.

Durch den Sauerstoffeintrag in die Partikelschicht wird die Verbrennung des organischen Reststoffs beschleunigt und der gasförmige (CO) und feste (organsicher Kohlenstoff) Ausbrand verbessert. Darüberhinaus wird eine Reduzierung der CO2-Emission erreicht, indem weniger Zusatzbrennstoff zur Aufrechterhaltung der Temperatur in der Wirbelschicht verbrannt wird.

Diese Wirkungen werden jedoch nur unter der Bedingung erzielt, dass sich im Freiraum eine reduzierend oder allenfalls wenig oxidierend wirkende Atmosphäre einstellt. Als Anhaltspunkt dafür dient ein mittlerer Sauerstoffgehalt im Bereich von 0 bis 3 Vol.% im Freiraum. Der Ausdruck "mittlerer" Sauerstoffgehalt bezieht sich darauf, dass der Sauerstoffgehalt in mindestens einem Bereich innerhalb des Freiraums ermittelt wird, in dem weder ein extrem hoher, noch ein extrem niedriger Sauerstoffgehalt zu erwarten ist. Aus Gründen der Messgenauigkeit wird der "mittlere" Sauerstoffgehalt jedoch vorzugsweise als Mittelwert aus mindestens zwei Messungen des Sauerstoffgehalts im Freiraum ermittelt. Diese Messungen können zeitlich hintereinander und/oder in voneinander beabstandeten Bereichen des Freiraums vorgenommen werden.

Die fluidisierte Partikelschicht wird mit Sauerstoff angereichert. Für die Sauerstoff-Anreicherung der fluidisierten Partikelschicht wird entweder reiner Sauerstoff oder ein Gasgemisch mit einem Sauerstoffgehalt von mindestens 80 Vol.% eingesetzt. Hierzu wird Sauerstoff unmittelbar oder mittelbar - beispielsweise durch Einbringen in das Fluidisierungsgas - in die Partikelschicht eingeleitet. Es ist auch möglich, einen sauerstoffhaltigen Gasstrom zusätzlich zum Fluidisierungsgas durch die Fluidisierungseinrichtung in die Partikelschicht einzuleiten.

Besonders bewährt hat sich jedoch eine Verfahrensvariante, bei der dem Fluidisierungsgas in einer ersten Einspeisungszone, in Strömungsrichtung gesehen vor der Fluidisierungseinrichtung, Sauerstoff zugeführt wird. Dadurch wird der Sauerstoff vor Einleitung in die Partikelschicht auf die Temperatur des Fluidisierungsgases temperiert, so dass die Ausbildung eines Temperaturgradienten in der Partikelschicht möglichst gering gehalten wird. Um einen ausreichenden Ausbrand zu gewährleisten ist eine gleichmäßige Temperaturverteilung in der Wirbelschicht anzustreben.

Bei dieser Verfahrensvariante wird der Sauerstoffgehalt des Fluidisierungsgases nach der ersten Einspeisungszone vorzugsweise auf einen Sauerstoff-Grenzwert im Bereich von 10 Vol.-% bis 28 Vol.% eingestellt. In erster Näherung nimmt der Durchsatz des zu verbrennenden organischen Reststoffs mit dem Sauerstoffgehalt zu. Ein weiterer Parameter, der den Durchsatz des zu verbrennenden organischen Reststoffs beeinflusst, ist die Temperatur des Fluidisierungsgases. Als Fluidisierungsgas kann sowohl nicht vorgewärmte Umgebungsluft als auch vorgewärmte oder auf hohe Temperaturen erhitzte Luft verwendet werden. Bei einer Verfahrensweise mit vorgewärmter oder erhitzter Luft kann sich die Temperaturbeständigkeit der Fluidisierungseinrichtung, insbesondere gegenüber dem sauerstoffhaltigen, oxidierend wirkendem Fluidisierungsgas als begrenzender Faktor erweisen. Daher wird der Sauerstoffgehalt bevorzugt auf einen Sauerstoff-Grenzwert von maximal 26 Vol.% eingestellt, wenn das Fluidisierungsgas auf eine Temperatur von weniger als 500 °C vorgewärmt wird.

Das Vorwärmen des Fluidisierungsgases erfolgt vorzugsweise rekuperativ durch das heiße Rauchgas. Dadurch lässt sich das Fluidisierungsgas energiesparend auf bis zu 500°C erwärmen. Die Energieeinsparung bringt darüberhinaus eine Verringerung der CO₂-Emission mit sich.

In einer anderen, gleichermaßen bevorzugten Verfahrensvariante wird das Fluidisierungsgas auf eine Temperatur zwischen 500 °C und 750 °C vorgeheizt, wobei der Sauerstoffgehalt auf einen Sauerstoff-Grenzwert von maximal 24 Vol.-% eingestellt wird. Das Erhitzen des Fluidisierungsgases auf derartig hohe Temperaturen bewirkt eine möglichst vollständige und rasche Verbrennung des organischen Reststoffs.

Vorzugsweise erfolgt das Vorheizen des Fluidisierungsgases durch Verbrennung mit einem Brennstoff. Durch entsprechende Regelung der Verbrennung lässt sich eine vorgegebene Temperatur des Fluidisierungsgases definiert und reproduzierbar einstellen. Beispielsweise wird das Fluidisierungsgas durch direkte überstöchiometrische Verbrennung mit einem Brennstoff in einer Vorbrennkammer auf bis zu 750°C erhitzt. Noch höhere Vorheiztemperaturen sind theoretisch möglich, praktisch jedoch durch die Hochtemperaturkorrosionsbeständigkeit der Fluidisierungseinrichtung begrenzt.

Auch das erhitzte Fluidisierungsgas kann mit dem bei der Verbrennung entstehendem Rauchgas verdünnt und so die Sauerstoffkonzentration im Fluidisierungsgas auf einen vorgegebenen Wert zwischen 10 Vol.-% und 21 Vol.% eingestellt werden.

Bei den bisher beschriebenen, bevorzugten Verfahrensweisen erfolgt die Einspeisung von Sauerstoff in die Partikelschicht dadurch, dass dem Fluidisierungsgas Sauerstoff zugeführt wird. Der Sauerstoffgehalt des Fluidisierungsgases wird dabei jedoch durch die Beständigkeit der Fluidisierungseinrichtung - etwa einem Anströmboden - gegenüber einem korrosiven Angriff, beschränkt. Bei einer alternativen und gleichermaßen bevorzugten Verfahrensweise wird der fluidisierten Partikelschicht Sauerstoff in einer zweiten Einspeisungszone oberhalb der Fluidisierungseinrichtung zugeführt. Dabei wird ein sauerstoffhaltiger Gasstrom direkt in die Partikelschicht eingeleitet. Diese Verfahrensweise wird im folgenden als "Direkteinspeisung" bezeichnet. Die Direkteinspeisung kann alternativ oder zusätzlich zu den oben erläuterten Verfahrensweisen eingesetzt werden, der fluidisierten Partikelschicht den erforderlichen Sauerstoff zuzuführen. Ein besonderer Vorteil der Direkteinspeisung liegt darin, dass der Sauerstoffeintrag durch den sauerstoffhaltigen Gasstroms durch die Korrosion der Fluidisierungseinrichtung nicht beeinflusst wird und daher - mit der Maßgabe, dass sich im Freiraum ein mittlerer Sauerstoffgehalt im Bereich von 0 bis 3 Vol.% einstellt - beliebig hoch eingestellt werden kann. Dadurch lässt sich die Verbrennung des organischen Reststoffs weiter verbessern.

Als besonders günstig hat es sich erwiesen, den Sauerstoff durch transversale Überschallinjektion der Partikelschicht zuzuführen. Durch die transversale Überschallinjektion wird ein besonders tiefes Eindringen des Sauerstoffs in die Partikelschicht und eine innige Vermischung von Sauerstoff und dem organischen Reststoff erreicht.

Vorteilhafterweise wird dabei der äquivalente Sauerstoffgehalt in der fluidisierten Partikelschicht oberhalb der zweiten Einspeisungsstelle auf eine Konzentration größer als 28 Vol.-% eingestellt. Der hohe Sauerstoffgehalt gewährleistet eine möglichst rasche und vollständige Verbrennung. Unter einem äquivalenten Sauerstoffgehalt wird derjenige Sauerstoffgehalt verstanden, der entstehen würde, wenn der Sauerstoff direkt in das Fluidisierungsgas zugegeben wird und sich dort anreichert.

Im Hinblick auf einen möglichst geringen NOₓ-Gehalt des Abgases ist es bei allen oben erläuterten Verfahrensweisen wesentlich, dass sich im Freiraum ein mittlerer Sauerstoffgehalt im Bereich von 0 bis 3 Vol.% einstellt. Daher hat es sich als vorteilhaft erwiesen, dass der Sauerstoffgehalt im Freiraum fortlaufend gemessen und aus der Messung ein mittlerer Sauerstoffgehalt ermittelt wird, und dass anhand des Mittelwerts die Zufuhr von Sauerstoff in die fluidisierte Partikelschicht und / oder die Zufuhr des organischen Reststoffs zum Verbrennungsraum geregelt wird.

Die Genauigkeit der Sauerstoff-Messung im Freiraum wird verbessert, indem der mittlere Sauerstoffgehalt aufgrund von Messungen an mindestens zwei voneinander beabstandeten Messstellen im Freiraum ermittelt wird. Im Bereich der Messstellen wird entweder der Sauerstoffgehalt direkt gemessen, oder es wird dort Gas aus dem Freiraum entnommen und einer Sauerstoff-Messung zugeführt.

Es wird eine Verfahrensweise bevorzugt, bei der mindestens ein Teil des Fluidisierungsgases durch rückgeführtes Rauchgas gebildet wird. Diese Verfahrensweise zeichnet sich durch eine besonders deutliche Reduzierung der NOₓ-Konzentration im Rauchgas aus, was auf die Reduzierung des molekularen Stickstoffs und der Konzentration an atomarem Sauerstoff in der fluidisierten Partikelschicht, sowie auf partielle CO-Bildung zurückgeführt werden kann.

Eine weitere Verbesserung ergibt sich bei einer Verfahrensweise, bei der unverbrannte, feste oder gasförmige Brennstoffe im Rauchgas in einer Nachverbrennungszone oder einer Nachbrennkammer zusammen mit einem Sekundärbrennstoff unter Zugabe von Sekundärluft verbrannt werden, wobei das Rauchgas mit Sekundärsauerstoff oder einem sauerstoffhaltigen Gas mit mindestens 80 Vol.% Sauerstoff angereichert wird. Diese Verfahrensweise erleichtert die Einhaltung von vorgeschriebenen Mindestanforderungen an die Rauchgastemperatur und an die Sauerstoffkonzentration im Rauchgas. Das Rauchgas wird mit Sekundärsauerstoff oder mit einem sauerstoffhaltigen Gas mit mindestens 80 Vol.-% Sauerstoff derart angereichert, wie dies zur Einhaltung eines vorgegebenen Mindestsauerstoffgehalts im Rauchgas erforderlich ist.

Aufgrund der Sauerstoffanreicherung des Rauchgases kann die Sekundärluft reduziert werden, ohne dass die Mindest-Rauchgastemperatur unterschritten wird. Darüberhinaus verringert sich der in der Sekundärluft mitaufizuheizende Stickstoffballast, so dass der spezifische Brennstoffbedarf reduziert werden kann. Die dabei eingesparte Brennstoffmenge entspricht der Wärmemenge, die ansonsten notwendig wäre, um den weggefallenen Stickstoffballast auf Rauchgastemperatur aufzuheizen.

Die Wirkung der Sauerstoff-Anreicherung des Rauchgases wird noch verstärkt, wenn der Sekundärsauerstoff oder das sauerstoffhaltige Gas direkt in die Nachverbrennungszone oder in die Nachbrennkammer mit einer Geschwindigkeit entsprechend einer Austrittsmachzahl M von 0,25 < M. < 1 eingeblasen wird.

Es hat sich als günstig erwiesen, den Sekundärsauerstoff oder das sauerstoffhaltige Gas in die Sekundärluft zuzugeben.

Die oben genannte technische Aufgabe wird daher andererseits ausgehend von dem eingangs genannten Verfahren erfindungsgemäß auch dadurch gelöst, dass in die Nachreaktionszone oder Nachbrennkammer Sekundärsauerstoff eingespeist wird derart, dass sich im Rauchgas hinter der Nachreaktionszone oder der Nachbrennkammer ein Sauerstoffgehalt von mindestens 6 Vol.% einstellt.

Unverbrannte, feste oder gasförmige Brennstoffe im Rauchgas werden in der Nachverbrennungszone oder der Nachbrennkammer zusammen mit einem Sekundärbrennstoff unter Zugabe von Sekundärluft verbrannt werden, wobei das Rauchgas mit Sekundärsauerstoff oder einem sauerstoffhaltigen Gas angereichert wird. Der Sauerstoffgehalt eines derartigen sauerstoffhaltigen Gases beträgt mindestens 80 Vol.-%. Die Mindestanforderungen an die Sauerstoffkonzentration im Rauchgas lassen sich dadurch einhalten und diese Verfahrensweise erleichtert darüberhinaus die Einhaltung von vorgeschriebenen Mindestanforderungen an die Rauchgastemperatur. Das Rauchgas wird mit Sekundärsauerstoff oder mit einem sauerstoffhaltigen Gas mit mindestens 80 Vol.-% Sauerstoff derart angereichert, wie dies zur Einhaltung eines vorgegebenen Mindestsauerstoffgehalts im Rauchgas erforderlich ist.

Aufgrund der Sauerstoffanreicherung des Rauchgases kann die Sekundärluft reduziert werden, ohne dass die Mindest-Rauchgastemperatur unterschritten wird. Darüberhinaus verringert sich der in der Sekundärluft mitaufzuheizende Stickstoffballast, so dass der spezifische Brennstoffbedarf reduziert werden kann.

Hinsichtlich der Vorrichtung zur Durchführung des Verfahrens wird die oben angegebene Aufgabe ausgehend von der eingangs beschriebenen Vorrichtung erfindungsgemäß dadurch gelöst, dass ein Einlass für einen sauerstoffhaltigen Gasstrom in die fluidisierte Partikelschicht vorgesehen ist, und dass die Messeinrichtung mindestens zwei im Freiraum voneinander beabstandet angeordnete Sauerstoff-Messstellen zur fortlaufenden Messung je eines Sauerstoffgehalts im Freiraum umfasst, und dass die Messeinrichtung mit einer Einrichtung zur Bildung eines Mittelwerts aus den gemessenen Sauerstoffgehalten und mit einer Regelung für die Zufuhr des organischen Reststoffs und / oder für die Zufuhr des sauerstoffhaltigen Gasstroms zu der fluidisierten Partikelschicht verbunden ist.

Bei der erfindungsgemäßen Vorrichtung ist mindestens ein Einlass für einen sauerstoffhaltigen Gasstrom in die fluidisierte Partikelschicht vorgesehen. Hinsichtlich der Wirkung und Funktion des sauerstoffhaltigen Gasstroms auf den Durchsatz und die Produktivität der Verbrennung wird auf die obigen Ausführungen zum erfindungsgemäßen Verfahren verwiesen.

Weiterhin umfasst die erfindungsgemäße Vorrichtung eine Messeinrichtung mit mindestens zwei im Freiraum voneinander beabstandet angeordneten Sauerstoff-Messstellen zur fortlaufenden Messung je eines Sauerstoffgehalts im Freiraum. Im Bereich der Messstellen wird entweder der Sauerstoffgehalt direkt gemessen, oder es wird Gas aus dem Freiraum entnommen und nachfolgend analysiert. Dadurch, dass der Sauerstoffgehalt als Mittelwert mindestens zweier Messungen ermittelt wird, wird die Genauigkeit der Sauerstoff-Messung im Freiraum verbessert. Lokale oder zeitliche Schwankungen des Sauerstoffgehalts werden so mindestens teilweise kompensiert.

Zur Berechnung des Mittelwerts ist eine Einrichtung - beispielsweise ein Prozessrechner - vorgesehen. Dieser ist mit einer Regelung für die Zufuhr des organischen Reststoffs und / oder einer Zufuhr für einen sauerstoffhaltigen Gasstrom zu der fluidisierten Partikelschicht verbunden. Für diese Regelung wird der Mittelwert des Sauerstoffgehalts als Regelgröße verwendet. Da sich der so ermittelte Mittelwert durch eine hohe Stabilität und Genauigkeit auszeichnet, wird eine entsprechend genaue und stabile Regelung der Zufuhr des organischen Reststoffs und / oder der Zufuhr für den sauerstoffhaltigen Gasstrom zu der fluidisierten Partikelschicht erhalten. Durch die stabile Prozessführung lässt sich der NOₓ-Gehalt des Rauchgases weiter verringern.

Weiterhin umfasst die erfindungsgemäße Vorrichtung eine Einrichtung mit der der Stickstoffballast und damit der Rauchgasvolumenstrom bei Verwendung von Luft als Oxidationsmedium zur Verbrennung von unverbrannten festen und gasförmigen Rauchgasbestandteilen in einer Nachverbrennungszone oder in einer SekundärBrennkammer reduziert werden kann, indem im Bereich der Nachbrennkammer oder in der Sekundärbrennkammer die notwendige Sekundärverbrennungsluftmenge durch eine Sauerstoffmenge entsprechend der vorgeschriebenen Sauerstoff-Konzentration von zum Beispiel 6 Vol.% im Rauchgas ersetzt wird und die Sekundärbrennstoffmenge zum Aufheizen des Rauchgases auf die geforderte Mindesttemperatur von zum Beispiel 850°C reduziert wird. Die eingesparte Brennstoffmenge entspricht mindestens der Wärmemenge, die notwendig ist, um den fehlenden Stickstoffballast in dem Oxidationsmedium auf Rauchgastemperatur aufzuheizen.

Der Sauerstoff wird dabei in reiner Form oder als sauerstoffhaltiges Gas an mindestens einer Stelle mit geeigneten Düsen mit einer Geschwindigkeit entsprechend einer Austrittsmachzahl "M" von 0,25 < M < 1 in die Nachverbrennungszone oder Sekundärbrennkammer eingeblasen oder in den Sekundärluftstrom vor Eintritt in den Verbrennungsraum zugegeben.

Nachfolgend wird die Erfindung anhand von Ausführungsbeispielen und Zeichnungen näher erläutert. Die Zeichnungen zeigen in schematischer Darstellung im einzelnen :
- **Figur 1**: einen stationären Wirbelschichtofen gemäß der Erfindung zur Durchführung einer ersten Verfahrensvariante des erfindungsgemäßen Verfahrens,
- **Figur 2**: einen stationären Wirbelschichtofen gemäß der Erfindung zur Durchführung einer zweiten Verfahrensvariante des erfindungsgemäßen Verfahrens, und
- **Figur 3**: einen stationären Wirbelschichtofen gemäß dem Stand der Technik.

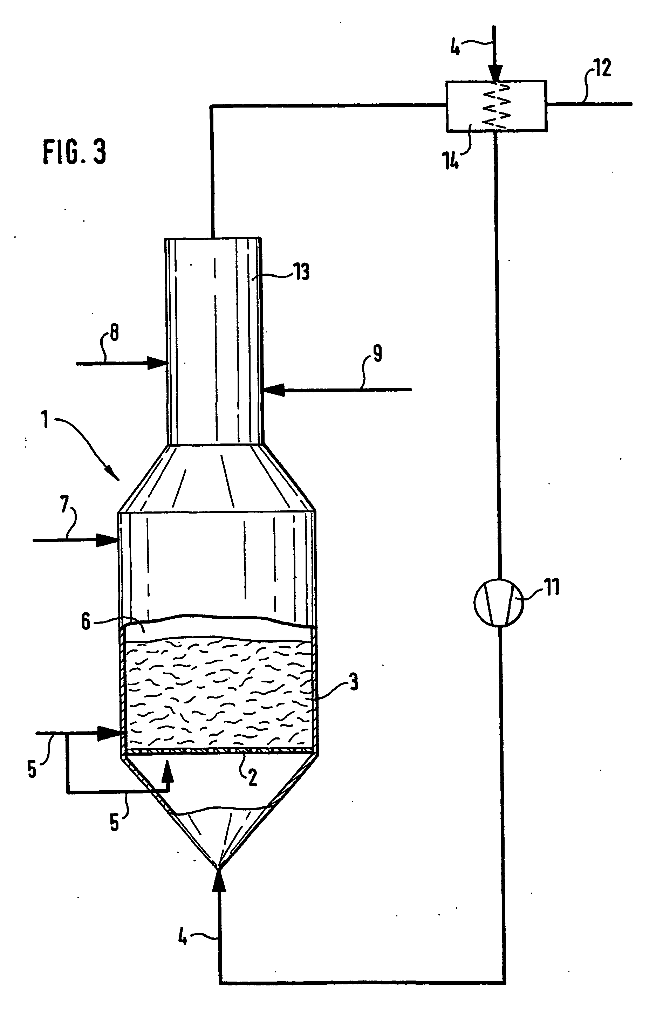

Ein aus dem Stand der Technik bekannter Wirbelschichtofen 1 zur Verbrennung von Klärschlamm ist schematisch in **Figur 3** dargestellt. Im unteren Bereich des Ofens 1 ist ein Anströmboden 2 vorgesehen, über dem eine Wirbelschicht 3 aus Bettmaterial und Klärschlamm erzeugt wird, indem von unten ein mittels Gebläse 11 erzeugter Luftstrom 4 durch den Anströmboden 2 eingeblasen wird. Der Luftstrom dient gleichzeitig als Verbrennungs- und als Fluidisierungsgas. Der Durchmesser des Wirbelschichtofens 1 beträgt 5,7 m und die Höhe des Wirbelschichtofenfreiraumes liegt bei etwa 10,6 m.

Über der Wirbelschicht 3 ist ein Freiraum 6 vorgesehen, über den Rauchgas 12 abgezogen wird. Über einen Zulauf 7 im Freiraum 6 wird dem Ofen 1 kontinuierlich Klärschlamm zugeführt.

Zum Erhitzen und Verbrennen des Klärschlamms in der Wirbelschicht 3 wird dem Luftstrom 4 ein Brennstoff 5 beigemischt; der Brennstoff 5 kann aber auch direkt in die Wirbelschicht 3 eingeleitet werden.

Vom Freiraum 6 gelangt das Rauchgas 12 in eine Nachverbrennungszone 13, in der unverbrannte, feste oder gasförmige Brennstoffe zusammen mit einem Sekundärbrennstoff 8 und unter Zugabe von Sekundärluft 9 verbrannt werden.

Das Rauchgas 12 wird über einen Wärmetauscher 14, der zur Vorwärmung der des Luftstromes 4 dient, abgezogen.

Nachfolgend wird ein Verfahren zur Klärschlammverbrennung unter Einsatz des in Figur 3 schematisch dargestellten Ofens 1 erläutert, wobei die wesentlichen Verfahrensparameter und -ergebnisse tabellarisch zusammengefasst sind.

### Vergleichsbeispiel 1

| | |
|---|---|
| Klärschlammdurchsatz | 8500 kg/h |
| Trockensubstanzgehalt | 40% |
| Heizwert | 14.000 KJ/kgGV |
| Wirbelschichttemperatur | 850°C |
| Wirbelgastemperatur | 702°C |
| Freiraumtemperatur | 920°C |
| Wirbelgasmenge | 14.881m³/h i.N. |
| Wirbelluftmenge | 14.275 m³/h i.N. |
| Erdgasmenge | 606 m³/h i.N. |
| Rauchgasmenge im Freiraum | 22:616m³/h i.N. |
| Sauerstoffkonzentration im Freiraum | 2 Vol.-% trocken |
| Stickstoffkonzentration im Freiraum | 49,7 Vol.-% |
| Stickoxidkonzentration im Freiraum | 180 bis 350 mg/m³ |

Zur Vorwärmung des Wirbelgases auf 702°C wurden 321 m³/h Erdgas mit der Wirbelluft überstöchiometrisch verbrannt. Der Sauerstoffgehalt im Wirbelgas reduzierte sich dabei von 21 Vol.-% auf ca. 20,1 Vol.%.

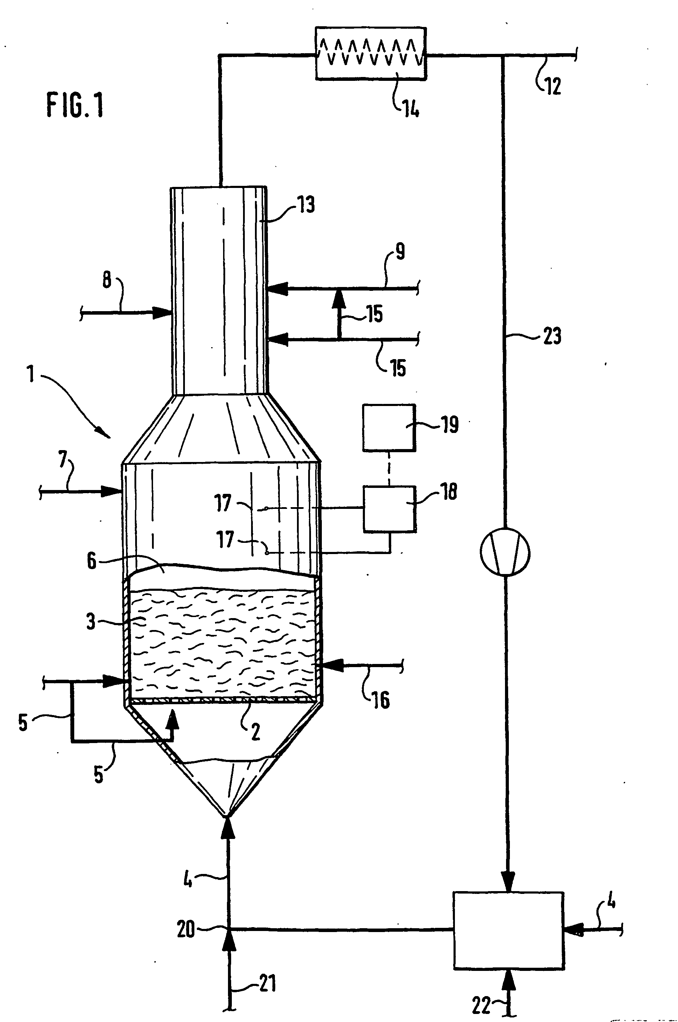

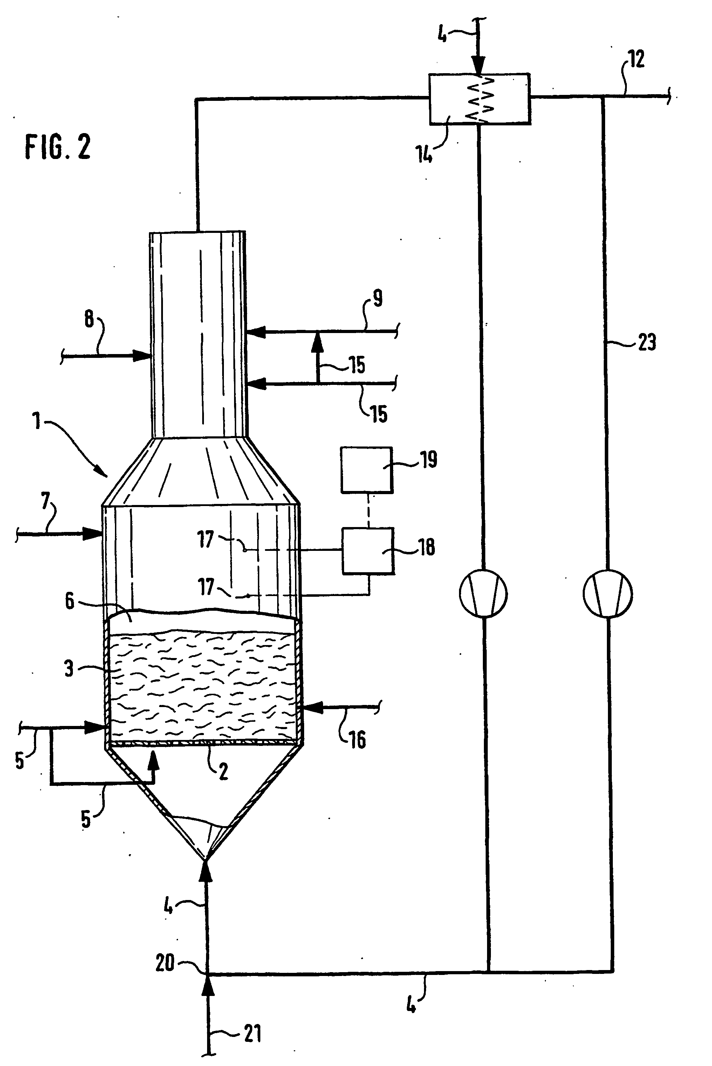

Sofern bei den nachfolgend in den Figuren 1 und 2 dargestellten Wirbelschichtofen 1 gemäß dieser Erfindung identische Bezugsziffern wie in Figur 3 verwendet sind, so werden damit gleiche oder äquivalente Bestandteile des oben beschriebenen Wirbelschichtofens 1 bezeichnet. Auf die entsprechenden Erläuterungen wird verwiesen.

Der in Figur 1 dargestellte erfindungsgemäße Wirbelschichtofen 1 weist zusätzlich im Bereich der Wirbelschicht 3 einen Sauerstoffeinlass 16 auf, über den der Wirbelschicht 3 ein erster Zusatzsauerstoffstrom 16 (in Form von reinem Sauerstoff) zugeführt werden kann.

In einer Einspeisestelle 20 unterhalb des Anströmbodens 2 wird dem Luftstrom 4 ein zweiter Zusatzsauerstoffstrom 21 (ebenfalls reiner Sauerstoff) beigemischt.

In den Luftstrom 4 wird vor der Einspeisestelle 20 ein Zusatzbrennstoff 22 gemischt. Durch die Verbrennung des Zusatzbrennstoffs 22 wird der Luftstrom 4 auf eine Temperatur von etwa 702 °C aufgeheizt.

Weiterhin sind im Freiraum 6 zwei voneinander entfernte Messstellen 17 für die Messung des Sauerstoffgehalts im Freiraum 6 vorgesehen. Von den Messstellen 17 werden Gasproben abgezogen und mittels einer Sauerstoffsonde 18 kontinuierlich analysiert. Der so ermittelte mittlere Sauerstoffgehalt im Freiraum 6 dient zur Regelung der Sauerstoffzufuhr über den ersten Zusatzsauerstoffstrom 16 und/oder den zweiten Zusatzsauerstoffstrom 21 oder/oder der Zufuhr 7 der Klärschlammmenge.

Außerdem wird entweder der Luftstrom 9 zur Nachverbrennung des Rauchgases 12 mit Sauerstoff 15 angereichert, oder zusätzlicher Sauerstoff 15 wird direkt in die Nachverbrennungszone 13 eingespeist.

Nachfolgend wird ein Vergleichsbeispiel für ein Verfahren zur Klärschlammverbrennung unter Einsatz des in Figur 1 schematisch dargestellten Ofens 1 erläutert (ohne Regelung der Sauerstoffzufuhr):

### Vergleichsbeispiel 2

| | |
|---|---|
| | |
| Klärschlammdurchsatz | 12.750 kg/h |
| Trockensubstanzgehalt | 40% |
| Heizwert | 14.000 KJ/kgGV |
| Wirbelschichttemperatur | 850°C |
| Wirbelgastemperatur | 702°C |
| Freiraumtemperatur | 920°C |
| Wirbelgasmenge | 14932 m³/h i.N. |
| Wirbelluftmenge | 12.344 m³/h i.N. |
| Zusatzsauerstoffmenge | 1887 m³/h i.N. |
| Erdgasmenge | 701 m³/h i.N. |
| Rauchgasmenge im Freiraum | 26.522 m³/h i.N. |
| Sauerstoffkonzentration im Freiraum | 5,2 Vol.-% trocken |
| Stickstoffkonzentration im Freiraum | 37,0 Vol.-% |
| Stickoxidkonzentration im Freiraum | 310 bis 450 mg/m³ |

Der Vergleich der beiden Vergleichsbeispiele 1 und 2 zeigt, dass durch Zugabe von Sauerstoff, entsprechend einer äquivalenten Sauerstoffkonzentration von 30 Vol.% in dem Wirbelgas, die Durchsatzleistung zwar um ca. 50% gesteigert werden konnte. Nachteilig war jedoch, dass dadurch die Stickoxidkonzentration von 310 bis 450 mg/m³, und damit über den zulässigen Grenzwert angestiegen ist. Zur Einhaltung des Stickoxid-Grenzwertes ist daher eine zusätzliche Maßnahme, wie zum Beispiel die Nachrüstung mit einer SCR- oder SNCR-Anlage erforderlich, Durch die zusätzlichen Investitionskosten und Betriebsmittelkosten für das Reduktionsmittel wird die Wirtschaftlichkeit des Sauerstoffverfahrens beeinträchtigt.

Diese Erhöhung der Stickoxidkonzentration ist ursächlich bedingt durch die proportional zur Klärschlammmenge erzeugte Stickoxidfracht bei nahezu konstanten Rauchgasmengen.

Gegenstand der vorliegenden Erfindung ist nicht nur die Durchsatzsteigerung von organischem Reststoff in Wirbelschichtreaktoren ohne wesentliche Erhöhung des Rauchgasvolumens, sondern auch die Reduzierung von Schadstoffkonzentrationen, wie z.B. Stickoxide.

Aus der DE 3703568 ist ein Stickoxidminderungsverfahren bekannt, bei dem als Fluidisierungsgas anstelle von Wirbelluft ein Gemisch aus Luft und Rauchgasen verwendet wird, wobei die Rauchgase temperatur- und mengengeregelt durch Rauchgasrückführung nach dem Wirbelschichtreaktor bzw. dem Abhitzekessel und Filter der Verbrennungsluft zugeführt werden.

Überraschend wurde nun gefunden, dass das Problem der höheren Stickoxid-Konzentrationen bei konstantem Rauchgasvolumen und gleichzeitiger Klärschlamm-Durchsatzsteigerung mit Sauerstoffzusatz dadurch gelöst werden kann, indem die Sauerstoffkonzentration in der Wirbelschicht 3' entsprechend der höheren Klärschlammmenge angereichert und ein Teil des Luftstroms 4 durch nach dem Wärmetauscher 14 entnommenes, rückgeführtes Rauchgas 23 ersetzt wird, so dass sich im Freiraum 6 über der Wirbelschicht 3 ein mittlerer Sauerstoffgehalt von 0 bis 3 Vol.-% O₂ einstellt.

Ein derartiges Ausführungsbeispiel für das Verfahren gemäß der vorliegenden Erfindung unter Einsatz des in Figur 1 schematisch dargestellten Ofens 1 wird nachfolgend erläutert, wobei die wesentlichen Verfahrensparameter und - ergebnisse wieder tabellarisch zusammengefasst sind. Der Sollwert des Sauerstoffgehalts beträgt hierbei 1,3 Vol.%.

### Beispiel 1

| | |
|---|---|
| Klärschlammdurchsatz | 12.750 kg/h |
| Trockensubstanzgehalt | 40% |
| Heizwert | 14.000 KJ/kgGV |
| Wirbelschichttemperatur | 850°C |
| Wirbelgastemperatur | 702°C |
| Freiraumtemperatur | 920°C |
| Wirbelgasmenge | 15.191m³/h i.N. |
| Wirbelluftmenge | 6.844 m³/h i.N. |
| Rückgasmenge | 5.500 m³/h i.N. |
| Zusatzsauerstoffmenge | 2203 m³/h i.N. |
| Erdgasmenge | 644 m³/h i.N. |
| Rauchgasmenge im Freiraum | 26.695 m³/h i.N. |
| Sauerstoffkonzentration im Freiraum | 1,3 Vol.-% |
| Stickstoffkonzentration im Freiraum | 28,6 Vol.% |
| Stickoxidkonzentration im Freiraum | 60 bis 180 mg/m³ |

Der Zusatzsauerstoffstrom 21 wird vor dem Anströmboden 2 in den Luftstrom 4 gemischt. Im Fall, dass der Luftstrom nicht vorgewärmt ist, wird aus Sicherheitsgründen eine Sauerstoffkonzentration von maximal 28 Vol.-% nach der Einspeisestelle 20 eingehalten. Bei Vorwärmung des Luftstroms 4 auf bis zu 500°C muss der sicherheitsrelevante Grenzwert für die Sauerstoffkonzentration im O₂-angereicherten Luftstrom 4 nach der Einspeisestelle 20 auf 26 Vol.-% vermindert werden. Dieser Grenzwert reduziert sich auf 24 Vol.-%, wenn der O₂-angereicherte Luftstrom 4 auf eine Temperatur zwischen 500 °C und 750°C vorgewärmt wird.
Keine Mengenbegrenzungen bzw. NOx-Konzentrationslimitierungen liegen vor, wenn der Sauerstoff durch Hochgeschwindigkeitsdüsen mit Austrittsmachzahlen von mindestens Mach 0,8, vorzugsweise mit Mach größer 1, als Zusatzsauerstoffstrom 16 direkt in die Wirbelschicht 4 eingeblasen wird. Die hohen Geschwindigkeiten sind für eine ausreichende Durchmischung des Sauerstoffes mit der Wirbelschicht 3 notwendig, um bei Steigerung des Klärschlammdurchsatzes und konstanten Rauchgasmengen, d.h. Fluidisierungsgeschwindigkeiten eine gleichmäßige Vermischung des Klärschlammes mit dem Sauerstoff, d.h., eine homogene Temperatur in der Wirbelschicht 4 zu erreichen.

In **Figur 2** ist ein weiteres Ausführungsbeispiel für einen Wirbelschichtofen 1 gemäß der Erfindung dargestellt.

Im Unterschied zu der in Figur 1 gezeigten Ausführungsform kann bei diesem Wirbelschichtofen 1 der Luftstrom 4 sowohl rekuperativ im Wärmetauscher 14 durch das Rauchgas 12 vorgewärmt und gleichzeitig dem Luftstrom 4 Rauchgas 12 beigemischt werden.

## Patentansprüche

1. Verfahren für die Verbrennung von organischem Reststoff, indem der Reststoff in einem Verbrennungsraum von einem sauerstoffhaltigen Fluidisierungsgas unter Bildung einer fluidisierten Partikelschicht durch eine Fluidisierungseinrichtung von unten durchströmt und verbrannt, und entstehendes Rauchgas über einen Freiraum oberhalb der Partikelschicht abgezogen und in einer Nachreaktionszone (13) oder Nachbrennkammer nachverbrannt wird, **dadurch gekennzeichnet, dass** die fluidisierte Partikelschicht (3) mit Sauerstoff angereichert wird, wobei reiner Sauerstoff oder ein Gasgemisch mit einem Sauerstoffgehalt von mindestens 80 Vol.% eingesetzt wird und sich im Freiraum (6) ein mittlerer Sauerstoffgehalt im Bereich von 0 - 3 Vol.-% einstellt.

2. Verfahren nach Anspruch 1, **dadurch gekennzeichnet, dass** dem Fluidisierungsgas (4) in einer ersten Einspeisungszone (20), in Strömungsrichtung gesehen vor der Fluidisierungseinrichtung (2), Sauerstoff zugeführt wird.

3. Verfahren nach Anspruch 2, **dadurch gekennzeichnet, dass** der Sauerstoffgehalt des Fluidisierungsgases (4) nach der ersten Einspeisungszone (20) auf einen Sauerstoff-Grenzwert im Bereich von 10 Vol.% bis 28 Vol.% eingestellt wird.

4. Verfahren nach Anspruch 3, **dadurch gekennzeichnet, dass** der Sauerstoffgehalt auf einen Sauerstoff-Grenzwert von maximal 26 Vol.% eingestellt wird, mit der Maßgabe, dass das Fluidisierungsgas auf eine Temperatur von weniger als 500 °C vorgewärmt wird.

5. Verfahren nach Anspruch 4, **dadurch gekennzeichnet, dass** das Fluidisierungsgas durch das Rauchgas (12) rekuperativ vorgewärmt wird.

6. Verfahren nach Anspruch 3, **dadurch gekennzeichnet, dass** der Sauerstoffgehalt auf einen Sauerstoff-Grenzwert von maximal 24 Vol.% eingestellt wird, mit der Maßgabe, dass das Fluidisierungsgas (4) auf eine Temperatur zwischen 500 °C und 750 °C vorgeheizt wird.

7. Verfahren nach Anspruch 6, **dadurch gekennzeichnet, dass** das Fluidisierungsgas (4) durch Verbrennung mit einem Brennstoff (22) vorgeheizt wird.

8. Verfahren nach einem der vorhergehenden Ansprüche, **dadurch gekennzeichnet, dass** der fluidisierten Partikelschicht (3) Sauerstoff in einer zweiten Einspeisungszone (16) oberhalb der Fluidisierungseinrichtung (2) zugeführt wird.

9. Verfahren nach Anspruch 8, **dadurch gekennzeichnet, dass** der Sauerstoff in der zweiten Einspeisungszone (16) durch transversale Überschallinjektion in die Partikelschicht (3) zugeführt wird.

10. Verfahren nach Anspruch 8 oder 9, **dadurch gekennzeichnet, dass** der äquivalente Sauerstoffgehalt in der fluidisierten Partikelschicht (3) oberhalb der zweiten Einspeisungsstelle (16) auf eine Konzentration größer als 28 Vol.% eingestellt wird.

11. Verfahren nach einem der vorhergehenden Ansprüche, **dadurch gekennzeichnet, dass** der Sauerstoffgehalt im Freiraum (6) fortlaufend gemessen und aus der Messung ein mittlerer Sauerstoffgehalt ermittelt wird, und dass anhand des Mittelwerts die Zufuhr von Sauerstoff in die fluidisierte Partikelschicht (3) und / oder die Zufuhr des organischen Reststoffs (7) zum Verbrennungsraum geregelt wird.

12. Verfahren nach Anspruch 11, **dadurch gekennzeichnet, dass** der mittlere Sauerstoffgehalt aufgrund von Messungen an mindestens zwei voneinander beabstandeten Messstellen (17) im Freiraum (6) ermittelt wird.

13. Verfahren nach einem der vorhergehenden Ansprüche, **dadurch gekennzeichnet, dass** mindestens ein Teil des Fluidisierungsgases (4) durch rückgeführtes Rauchgas (23) gebildet wird.

14. Verfahren nach einem der vorhergehenden Ansprüche, **dadurch gekennzeichnet, dass** unverbrannte, feste oder gasförmige Brennstoffe im Rauchgas in einer Nachverbrennungszone (13) oder einer Nachbrennkammer zusammen mit einem Sekundärbrennstoff (8) unter Zugabe von Sekundärluft (9) verbrannt werden, wobei zur Einhaltung eines vorgegebenen Mindestsauerstoffgehalts im Rauchgas (12) das Rauchgas (12) mit Sekundärsauerstoff (15) oder einem sauerstoffhaltigen Gas mit mindestens 80 Vol.% Sauerstoff angereichert wird.

15. Verfahren nach Anspruch 14, **dadurch gekennzeichnet dass** der Sekundärsauerstoff (15) oder das sauerstoffhaltige Gas direkt in die Nachverbrennungszone (13) oder in die Nachbrennkammer mit einer Geschwindigkeit entsprechend einer Austrittsmachzahl M von 0,25 < M < 1 eingeblasen werden.

16. Verfahren nach Anspruch 14 oder 15, **dadurch gekennzeichnet, dass** der Sekundärsauerstoff (15) oder das sauerstoffhaltige Gas in die Sekundärluft (9) zugegeben werden.

17. Verfahren nach einem der vorhergehenden Ansprüche, **dadurch gekennzeichnet daß** der Sauerstoff durch transversale Überschallinjektion der Partikelschicht zugeführt wird.

18. Verfahren nach einem der vorhergehenden Ansprüche, **dadurch gekennzeichnet, dass** in die Nachreaktionszone (13) oder Nachbrennkammer Sekundärsauerstoff eingespeist wird derart, dass sich im Rauchgas (12) hinter der Nachreaktionszone (13) oder der Nachbrennkammer ein Sauerstoffgehalt von mindestens 6 Vol.% einstellt.

19. Vorrichtung zur Durchführung des Verfahrens nach einem der Ansprüche 1 bis 18, mit einem Verbrennungsraum für die Aufnahme eines organischen Reststoffs mit einer Zufuhreinrichtung für die Zufuhr des organischen Reststoffs zu dem Verbrennungsraum, mit einem Gaseinlass, umfassend eine Fluidisierungseinrichtung für die Einleitung eines Fluidisierungsgases zur Erzeugung einer fluidisierten Partikelschicht, und mit einer Messeinrichtung zur Messung einer Gaskonzentration in einem Freiraum oberhalb der Partikelschicht, **dadurch gekennzeichnet, dass** ein Einlass für einen sauerstoffhaltigen Gasstrom (16; 21) in die fluidisierte Partikelschicht (3) vorgesehen ist, und dass die Messeinrichtung mindestens zwei im Freiraum (6) voneinander beabstandet angeordnete Sauerstoff-Messstellen (17) zur fortlaufenden Messung je eines Sauerstoffgehalts im Freiraum (3) umfasst, und dass die Messeinrichtung mit einer Einrichtung (19) zur Bildung eines Mittelwerts aus den gemessenen Sauerstoffgehalten und mit einer Regelung für die Zufuhr des organischen Reststoffs (7) und / oder für die Zufuhr des sauerstoffhaltigen Gasstroms (16; 21) zu der fluidisierten Partikelschicht (3) verbunden ist.

20. Vorrichtung nach Anspruch 19, **gekennzeichnet durch** Hochgeschwindigkeitsdüsen mit Austrittsmachzahlen von mindestens Mach 0,8 als Einlass für einen sauerstoffhaltigen Gasstrom (16; 21) in die fluidisierte Partikelschicht (3).

## Claims

1. Process for the incineration of organic waste, in which there flows through the waste material in an incineration chamber from below an oxygen-containing fluidization gas by way of a fluidization device, whereby a fluidized particle layer is formed and the waste material is incinerated, and flue gas generated is withdrawn by way of an open space above the particle layer and combusted in a post-incineration reaction zone (13) or post-incineration combustion chamber, **characterized in that** the fluidized particle layer (3) is enriched with oxygen, whereby pure oxygen or a gas mixture with an oxygen content of at least 80% by volume is used, and whereby a mean oxygen content in the range of 0 to 3% by volume occurs in the open space (6).

2. Process according to Claim 1, **characterized in that** oxygen is fed into the fluidization gas (4) in a first feed zone (20) upstream of the fluidization device (2).

3. Process according to Claim 2, **characterized in that** the oxygen content of the fluidization gas (4) after the first feed zone (20) is adjusted to an oxygen limit in the range of 10% by volume to 28% by volume.

4. Process according to Claim 3, **characterized in that** the oxygen content is adjusted to an oxygen limit of a maximum of 26% by volume, with the proviso that the fluidization gas is preheated to a temperature of less than 500°C.

5. Process according to Claim 4, **characterized in that** the fluidization gas is recuperatively preheated by way of the flue gas (12).

6. Process according to Claim 3, **characterized in that** the oxygen content is adjusted to an oxygen limit of a maximum of 24% by volume, with the proviso that the fluidization gas (4) is preheated to a temperature between 500°C and 750°C.

7. Process according to Claim 6, **characterized in that** the fluidization gas (4) is preheated by combustion with a fuel (22).

8. Process according to any of the preceding claims, **characterized in that** oxygen is fed to the fluidized particle layer (3) in a second feed zone (16) above the fluidization device (2).

9. Process according to Claim 8, **characterized in that** the oxygen in the second feed zone (16) is added by transversal supersonic injection into the particle layer (3).

10. Process according to claim 8 or 9, **characterized in that** the equivalent oxygen content in the fluidized particle layer (3) above the second feed location (16) is adjusted to a concentration larger than 28% by volume.

11. Process according to any of the preceding claims, **characterized in that** the oxygen content in the open space (6) is continuously measured and a mean oxygen content is determined from the measurement, and **in that** the feed of oxygen into the fluidized particle layer (3) and/or the feed of the organic waste (7) into the incineration chamber are controlled by way of the mean.

12. Process according to Claim 11, **characterized in that** the mean oxygen content is determined on the basis of measurements at least at two spaced apart measurement points (17) in the open space (6).

13. Process according to any of the preceding claims, **characterized in that** at least a part of the fluidization gas (4) is formed by recirculated flue gas (23).

14. Process according to any of the preceding claims, **characterized in that** fuels selected from the group consisting of uncombusted, solid and gaseous fuels in the flue gas are combusted in a post-incineration combustion zone (13) or a post-incineration combustion chamber together with a secondary fuel (8) with added secondary air (9), whereby for the maintaining of a preset minimum oxygen content in the flue gas (12) the flue gas (12) is enriched with secondary oxygen (15) or with an oxygen-containing gas with at least 80% by volume oxygen.

15. Process according to Claim 14, **characterized in that** the secondary oxygen (15) or the oxygen-containing gas are blown directly into the post-incineration combustion zone (13) or the post-incineration combustion chamber at a speed corresponding to an exit Mach speed M of 0.25<M<1.

16. Process according to Claim 14 or 15, **characterized in that** the secondary oxygen (15) or the oxygen-containing gas are added to the secondary air (9).

17. Process according to any of the preceding claims, **characterized in that** the oxygen is supplied by transversal supersonic injection to the particle layer.

18. Process according to any of the preceding claims, **characterized in that** secondary oxygen is fed into the post-incineration combustion zone (13) or post-incineration combustion chamber in such a way that an oxygen content of at least 6% by volume occurs in the flue gas (12) behind the post-incineration combustion zone (13) or post-incineration combustion chamber.

19. Apparatus for the operation of the process according to any of claims 1 to 18, with an incineration chamber for receiving an organic waste with a feed device for the supplying of the organic waste to the incineration chamber, with a gas inlet, comprising a fluidization device for the feeding of a fluidization gas for the generation of a fluidized particle layer, and with a measurement device for the measurement of a gas concentration in an open space above the particle layer, **characterized in that** an inlet for an oxygen-containing gas flow (16; 21) into the fluidized particle layer (3) is provided, and that the measurement device includes at least two oxygen measurement points (17) positioned spaced apart in the open space (6) for the continuous measuring of respectively one oxygen content in the open space (3), and that the measurement device is connected with a device (19) for the formation of a mean from the measured oxygen contents and with a control for the feed of the organic waste (7) and/or the feed of the oxygen-containing gas flow (16; 21) to the fluidized particle layer (3).

20. Apparatus according to Claim 19, **characterized by** high velocity nozzles having exit Mach numbers of at least Mach 0.8 as inlet for an oxygen-containing gas stream (16; 21) into the fluidized particle layer (3).

## Revendications

1. Procédé d'incinération d'un sous-produit organique, dans lequel le sous-produit est traversé par le bas et est incinéré dans un espace d'incinération par un gaz de fluidisation qui contient de l'oxygène, une couche de particules fluidisées étant formée au moyen d'un dispositif de fluidisation, dans lequel le gaz de fumée produit est aspiré dans un espace libre situé au-dessus de la couche de particules et est réincinéré dans une zone de post-réaction (13) ou chambre de combustion de gaz, **caractérisé en ce que** la couche fluidisée (3) de particules est enrichie en oxygène, de l'oxygène pur ou un mélange gazeux dont la teneur en oxygène est d'au moins 80 % en volume étant utilisés et la teneur moyenne en oxygène dans l'espace libre (6) étant comprise dans la plage de 0 à 3% en volume.

2. Procédé selon la revendication 1, **caractérisé en ce que** l'oxygène est amené au gaz de fluidisation (4) dans une première zone d'injection (20) qui, vue dans la direction d'écoulement, est agencée en amont du dispositif de fluidisation (2).

3. Procédé selon la revendication 2, **caractérisé en ce que** la teneur en oxygène du gaz de fluidisation (4) en aval de la première zone d'injection (20) est réglée à une valeur limite d'oxygène comprise dans la plage entre 10 % en volume et 28 % en volume.

4. Procédé selon la revendication 3, **caractérisé en ce que** la teneur en oxygène est réglée à une valeur limite d'oxygène de 26 % en volume au maximum, le gaz de fluidisation étant préchauffé à une température inférieure à 500°C.

5. Procédé selon la revendication 4, **caractérisé en ce que** le gaz de fluidisation est préchauffé par récupération sur le gaz de fumée (12).

6. Procédé selon la revendication 3, **caractérisé en ce que** la teneur en oxygène est réglée à une valeur limite d'oxygène de 24 % en volume au maximum, le gaz de fluidisation (4) étant préchauffé à une température comprise entre 500°C et 750°C.

7. Procédé selon la revendication 6, **caractérisé en ce que** le gaz de fluidisation (4) est préchauffé par combustion au moyen d'un combustible (22).

8. Procédé selon l'une des revendications précédentes, **caractérisé en ce que** l'oxygène est amené à la couche fluidisée (3) de particules dans une deuxième zone d'injection (16) agencée au-dessus du dispositif de fluidisation (2).

9. Procédé selon la revendication 8, **caractérisé en ce que** l'oxygène est amené dans la deuxième zone d'injection (16) par injection transversale supersonique dans la couche (3) de particules.

10. Procédé selon les revendications 8 ou 9, **caractérisé en ce qu'**au-dessus du deuxième emplacement d'injection (16), la teneur équivalente en oxygène est réglée à une concentration supérieure à 28 % en volume dans la couche fluidisée (3) de particules.

11. Procédé selon l'une des revendications précédentes, **caractérisé en ce que** la teneur en oxygène dans l'espace libre (6) est mesurée en continu, une teneur moyenne en oxygène est déterminée à partir des mesures et **en ce que** l'amenée d'oxygène dans la couche de particules fluidisée (3) et/ou l'amenée du sous-produit organique (7) dans l'espace d'incinération sont régulées à l'aide de la valeur moyenne.

12. Procédé selon la revendication 11, **caractérisé en ce que** la teneur moyenne en oxygène est déterminée sur base de mesures faites à au moins deux emplacements de mesure (17) mutuellement éloignés dans l'espace libre (6).

13. Procédé selon l'une des revendications précédentes, **caractérisé en ce qu'**au moins une partie du gaz de fluidisation (4) est formée par le gaz de fumée (23) réintroduit.

14. Procédé selon l'une des revendications précédentes, **caractérisé en ce que** les combustibles imbrûlés, solides ou gazeux contenus dans le gaz de fumée sont incinérés dans une zone de post-incinération (13) ou dans une chambre de combustion de gaz conjointement avec un combustible secondaire (8) et avec ajout d'air secondaire (9), le gaz de fumée (12) étant enrichi en oxygène secondaire (15) ou en gaz qui contient au moins 80 % en volume d'oxygène pour respecter une teneur minimale prédéterminée en oxygène dans le gaz de fumée (12).

15. Procédé selon la revendication 14, **caractérisé en ce que** l'oxygène secondaire (15) ou le gaz qui contient de l'oxygène sont directement injectés dans la zone de post-incinération (13) ou dans la chambre de combustion de gaz à une vitesse qui correspond à un nombre de Mach de sortie M de 0,25 < M < 1.

16. Procédé selon les revendications 14 ou 15, **caractérisé en ce que** l'oxygène secondaire (15) ou le gaz qui contient de l'oxygène sont ajoutés dans l'air secondaire (9).

17. Procédé selon l'une des revendications précédentes, **caractérisé en ce que** l'oxygène est amené dans la couche de particules par injection transversale supersonique.

18. Procédé selon l'une des revendications précédentes, **caractérisé en ce que** de l'oxygène secondaire est injecté dans la zone de post-réaction (13) ou dans la chambre de combustion de gaz de manière à régler une teneur en oxygène d'au moins 6 % en volume dans le gaz de fumée (12) en aval de la zone de post-réaction (13) ou de la chambre de combustion de gaz.

19. Dispositif pour mettre en oeuvre le procédé selon l'une des revendications 1 à 18, qui présente un espace d'incinération qui reçoit un sous-produit organique, qui présente un dispositif d'amenée qui amène le sous-produit organique à l'espace d'incinération, qui présente une admission de gaz, qui comprend un dispositif de fluidisation en vue de l'introduction d'un gaz de fluidisation qui produit une couche de particules fluidisées, qui comprend un dispositif de mesure qui mesure une concentration en gaz dans un espace libre situé au-dessus de la couche de particules, **caractérisé en ce qu'**une admission pour un écoulement (16; 21) de gaz qui contient de l'oxygène est prévue dans la couche fluidisée (3) de particules, **en ce que** le dispositif de mesure comprend au moins deux emplacements (17) de mesure d'oxygène agencés à distance mutuelle dans l'espace libre (6) pour mesurer en continu chaque fois une teneur en oxygène dans l'espace libre (6) et **en ce que** le dispositif de mesure est relié à un dispositif (19) qui calcule une moyenne à partir des teneurs mesurées en oxygène et avec une régulation de l'amenée du sous-produit organique (7) et/ou de l'amenée de l'écoulement (16; 21) de gaz qui contient de l'oxygène à la couche fluidisée (3) de particules.

20. Dispositif selon la revendication 19, **caractérisé par** des ajutages à haute vitesse dont le nombre de Mach de sortie est au moins Mach 0,8 qui servent d'admission d'un écoulement (16; 21) de gaz qui contient de l'oxygène dans la couche fluidisée (3) de particules.
